## Europäisches Patentamt
## European Patent Office
## Office européen des brevets

(19)

(11) Veröffentlichungsnummer: **0 172 356**
**B1**

(12)

# EUROPÄISCHE PATENTSCHRIFT

(45) Veröffentlichungstag der Patentschrift:
11.10.89

(51) Int. Cl.⁴: $G\ 01\ P\ 3/36$

(21) Anmeldenummer: 85107767.7

(22) Anmeldetag: 22.06.85

(54) Verfahren zur Signalauswertung bei einem faseroptischen Rotationssensor.

(30) Priorität: 31.07.84 DE 3428147

(43) Veröffentlichungstag der Anmeldung:
26.02.86 Patentblatt 86/09

(45) Bekanntmachung des Hinweises auf die Patenterteilung: 11.10.89 Patentblatt 89/41

(84) Benannte Vertragsstaaten:
DE FR GB IT

(56) Entgegenhaltungen:
DE–A– 3 040 514
US–A– 4 219 276
US–A– 4 456 376
Optics Letters, vol.5, no. 5, (Mai 1980), pp. 173-175
Opt. Soc. of America, R. Ulrich: "Fiber optic votation sensing with low drift"

(73) Patentinhaber: TELDIX GmbH
Grenzhöfer Weg 36 Postfach 105608
D-6900 Heidelberg 1 (DE)

(72) Erfinder: Kiesel, Eberhard
Friedrichsfelder Strasse 19
D-6803 Edingen (DE)

(74) Vertreter: Kammer, Arno, Dipl.-Ing.
TELDIX GmbH Postfach 10 56 08 Grenzhöfer Weg 36
D-6900 Heidelberg 1 (DE)

**Beschreibung**

Die Erfindung betrifft ein Verfahren zur Signalauswertung bei einem den Sagnac-Effekt ausnutzenden faseroptischen Rotationssensor, bei dem zwei gegenläufig in einem aus mehreren Windungen einer Lichtleitfaser gebildeten Umlaufpfad umlaufende Lichtwellen überlagert werden und in dem ein Phasenmodulator das umlaufende Licht mit einer Frequenz f moduliert und mittels einer Auswerteeinheit aus dem vom Rotationssensor gebildeten Signal die Rotationsgeschwindigkeit ermittelt wird.

Bekannte optische Drehratensensoren benutzen ohne Ausnahme ein interferometrisches Meßprinzip. Dabei wird der Einfluß einer Drehung auf zwei in einem geschlossenen Übertragungsweg entgegengesetzt laufende elektromagnetische Wellen (Lichtwellen) anhand der charakteristischen Interferenzstruktur meßtechnisch erfaßt.

Um eine hohe Nachweisempfindlichkeit zu erreichen, wird im allgemeinen eine phasenempfindliche Nachweistechnik benutzt, die die zusätzliche Phasenmodulation voraussetzt. Ein Nachteil dieses Verfahrens liegt darin, daß das am Ende vorliegende Signal neben der eigentlichen Information (Winkelfunktion, die proportional zur Drehrate ist) einen Proportionalitätsfaktor aufweist. Jede Variation dieses Vorfaktors beeinflußt die Skalierungsstabilität des Rotationssensors z. B. aufgrund folgender Effekte :

Variation der vom elektromagnetischen Sender emittierten Leistung (z. B. Alterung der Laserdiode) und damit auch Variation der durch Leistungteilung entstehenden Teilleistungen.

Variation der Übertragungsdämpfung, insbesondere Veränderung des Justagezustandes zwischen den einzelnen optischen Komponenten, Alterung der Lichtleitfaser usw.

Sogenanntes Polarisationsfading aufgrund der statistischen Polarisationsdrehung während des Durchlaufens des Ausbreitungsmediums und der nachfolgenden Polarisatoren.

Alle Effekte, die die Interferenzfähigkeit der Lichtwellen und damit die Sichtbarkeit der Interferenzstruktur beeinflussen, insbesondere die Variation der Kohärenzlänge.

Variation des Teilungsverhältnisses am Hauptstrahlteiler. Ein konstantes Teilungsverhältnis läßt sich nur bei Einhaltung bestimmter Parameter erreichen (z. B. Polarisationsrichtung).

Variation des Detektorwirkungsgrades. Dieser unterliegt bei optischen Lichtempfängern einem typischen Alterungsverhalten und ist zudem stark von Umgebungsbedingungen abhängig (Temperatur, Versorgungsspannung).

Es ist deshalb aus der DE-OS 30 40 514 ein Verfahren bekannt, bei dem das Ausgangssignal bei mehreren Frequenzen derart ausgewertet wird, daß mit Hilfe einer Quotientenbildung der Vorfaktor eliminiert wird. Dieses Verfahren ist jedoch sehr aufwendig, da es den Einsatz von weiteren phasenempfindlichen Gleichrichtern erfordert.

Aufgabe der Erfindung ist daher die Schaffung eines Signalauswerteverfahrens, das mit Hilfe eines geeigneten einfachen Meßverfahrens bei geringem Schaltungsaufwand die genannten Fehlerquellen kompensiert.

· Diese Aufgabe wird erfindungsgemäß dadurch gelöst, daß eine in dem Signal enthaltene Proportionalitätskonstante K mittels einer Meßeinrichtung bestimmt und anschließend zur Kompensation von Skalierungsinstabilitäten benutzt wird. Insbesondere bestehen zur Realisierung die Möglichkeiten zur Division des Sagnacsignals durch den erhaltenen Meßwert K oder die Rückführung von K in einem Regelkreis zur Lichtleistungsstabilisierung.

Bei der Erfindung kommt somit eine Meßeinrichtung zur Anwendung, die durch Bildung der Differenz des Maximal- und des Minimalwertes (Extremwertdifferenz) des Detektorsignales $i_D$ die Proportionaltätskonstante separiert bestimmt und den bestimmten Wert entweder zur Division des vom Rotationssensor gebildeten Signals oder zur Rückführung in den Regelkreis zur Lichtleistungsstabilisierung heranzieht. Damit ist gewährleistet, daß beliebige Einflüsse auf die Meßanordnung, die sich in einer Veränderung der Proportionalitätskonstanten bemerkbar machen, keine Verfälschung des Meßsignals bewirken. Weitere Ausgestaltungen der Erfindung sind in den Unteransprüchen und in der nachfolgenden Beschreibung eines Ausführungsbeispiels enthalten.

Anhand der Zeichnungen wird ein Ausführungsbeispiel der Erfindung näher erläutert.

Es zeigen

Fig. 1 den Aufbau eines faseroptischen Kursgebers,

Fig. 2 den in Fig. 1 dargestellten Aufbau mit geänderter Regelgrößenrückführung.

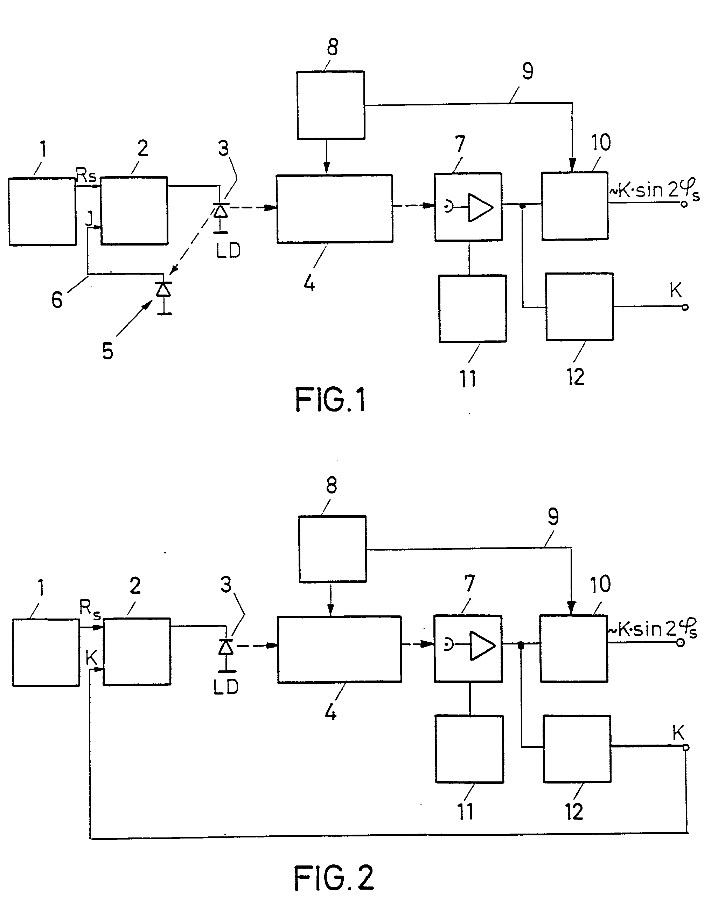

Eine Laserversorgungseinrichtung 2 liefert, wie in Fig. 1 gezeigt, das Ansteuersignal an eine Laserdiode 3, deren Lasersignal in ein optisches Übertragungssystem eingekoppelt wird.

Gleichzeitig wird das Signal dieser Diode über einen zweiten optischen Ausgang an eine Empfängerdiode 5 (Monitor) geleitet und über eine Rückführleitung 6 eine entsprechende Signalspannung J der Laserversorgungseinrichtung zugeführt. Die Lichtleistung der Laserdiode 3 ist abhängig von einem Sollwert $R_s$ der mittels eines Referenzwertgebers 1 gebildet und mit der Signalspannung J verglichen wird.

Das optische Übertragungssystem besteht aus einem Faser-Lichtleiter und weiteren optischen, im Faserkreisel benötigten Komponenten (z. B. Polarisatoren, Depolarisatoren, Modulatoren usw.), das ausgekoppelte Signal wird von der Empfängerdiode 7 aufgenommen. Mittels einer Modulationseinrichtung 8 wird das Lasersignal phasenmoduliert, ein Referenzsignal gelangt über die Leitung 9 an den phasenempfindlichen Gleichrichter 10. Eine stabile Versorgungsspannung für die Empfängerdiode 7 wird von der Spannungsquelle 11 dieser Diode zugeführt. Das verstärkte Ausgangssignal der Empfängerdiode gelangt zu dem phasenempfindlichen Gleichrichter 10 sowie zu einer Einrichtung 12 zur Messung der Extremwertdifferenz. Mittels der Extremwertdifferenzmessung wird die Proportionalitätskonstante K ermittelt, die zur Division des von dem phasenempfindlichen Gleichrichter 10 erzeugten Signals benutzt wird. Damit wird ein Ausgangssignal gebildet, welches direkt eine Funktion der Sagnacphase $\varphi_s$ darstellt und frei von der die Proportionalitätskonstante K enthaltenden Übertragungsfunktion ist. Als Folge beeinflußt eine Veränderung dieser Konstanten K nicht das Meßergebnis. Eine Veränderung entsteht insbesondere durch folgende Effekte. :

Variation der vom elektromagnetischen Sender emittierten Leistung (z. B. Alterung der Laserdiode, Instabilitäten der Referenz 1) und damit auch Variation der durch Leistungsteilung entstehenden Teilleistungen

Variation der Übertragungsdämpfung (z. B. Änderung des Justagezustandes zwischen den einzelnen optischen Komponenten des Übertragungsweges, Alterung des Wellenleiters, wechselnde Umwelteinflüsse (z. B. Vibration usw.).

Polarisationfading aufgrund der statistischen Polarisationsdrehung während des Durchlaufens des Ausbreitungsmediums und der nachfolgenden Polarisatoren

Verstärkungsvariation der ersten elektronischen Verstärkerstufen

Variation des Teilungsverhältnisses am Hauptstrahlteiler

Variation des Detektorwirkungsgrades. Dieser unterliegt bei optischen Lichtempfängern einem typischen Alterungsverhalten und ist zudem stark von Umgebungsbedingungen abhängig (Temperatur, Versorgungsspannung).

Diese Effekte, deren Einfluß auf die Proportionalitätskonstante K mehr oder weniger stark wirken und damit auch bisher das Meßergebnis verfälschten, werden durch die Einführung einer Extremwertdifferenzmessung bzw. allgemein durch die Einführung einer Meßmethode zur Ermittlung der Proportionalitätskonstanten K zuverlässig eliminiert.

In Fig. 2 ist ein der Fig. 1 nahezu identisches Ausführungsbeispiel gezeigt. Wesentliches Unterscheidungsmerkmal zu dem in Fig. 1 gezeigten Aufbau ist die geänderte Regelung der Lichtleistung der Laserdiode 3. Während in Fig. 1 die Lichtleistung mittels der Empfängerdiode 5 sensiert wird und diese ein Rückkoppelsignal J erzeugt, ist in Fig. 2 die Proportionalitätskonstante K, die von der Einrichtung zur Messung der Extremwertdifferenz 12 gebildet wird, das Rückkoppelsignal, das mit dem Sollwert $R_s$ verglichen wird. Durch diesen geänderten Regelkreis ist das System in der Lage, sämtliche oben beschriebene Störungen zu erfassen und das Ausgangssignal konstant zu halten.

Eine Voraussetzung zur direkten Bestimmung der Proportionalitätskonstanten ist, daß der zeitliche Verlauf des Detektorsignales von der Sagnacphase unabhängige Minimal- und Maximalwerte durchläuft, deren Differenz das gewünschte Extremwertdifferenzsignal liefert. Diese Forderung wird immer dann erfüllt, wenn ein bestimmter minimaler Phasenmodulationshub nicht unterschritten wird.

Der die gewünschten Informationen beinhaltende Anteil des Detektorsignals hat folgenden zeitlichen Verlauf :

$$i_D = K \cdot \cos^2(\varphi_s + \Psi_m \sin \omega_m t) . \tag{1}$$

Wobei $\varphi_s$ die Sagnacphase, $\omega_m$ die Modulationsfrequenz und $\psi_m$ den relativen Modulationshub zwischen den entgegengesetzt laufenden Wellen darstellt.

Um die Proportionalitätskonstante K direkt messen zu können, muß das Argument der Winkelfunktion in (1) mindestens einmal pro Modulationsperiode durch 0 (bzw. $k \cdot \pi$) und $\pi/2$ (bzw. $(2K \cdot 1)\pi/2$) gehen (k = ganze Zahl). Für $\psi_m \geq \pi/2$ wird diese Forderung unabhängig von $\varphi_s$ immer erfüllt :

$$K = \text{Max} (i_D) - \text{Min} (i_D) . \tag{2}$$

En weiterer Lösungsweg zur Bestimmung der Proportionalitätskonstanten bei beliebigen Modulationshüben ($\psi_m < \pi/2$), liefert bei der Extremwertdifferenzmessung die Proportionalitätskonstante verknüpft mit einer Funktion $f(\psi_m, \varphi_s)$ :

$$K \cdot f(\Psi_m, \varphi_s) = \text{Max} (i_D) - \text{Min} (i_D) . \tag{3}$$

Bei der Division des Kreiselausgangssignals durch die Extremwertdifferenz ergibt sich eine neue Funktion $F(\psi_m, \varphi_s)$ :

$$F(\psi_m, \varphi_s) = \frac{K \cdot J_1(2\psi_m) \cdot \sin 2\varphi_s}{K \cdot f(\psi_m, \varphi_s)}$$

$$F(\psi_m, \varphi_s) = \frac{J_1(2\psi_m) \cdot \sin 2\varphi_s}{f(\psi_m, \varphi_s)} \tag{4}$$

$J_1(2\psi_m)$ = Besselfunktion 1. Ordnung

Diese Funktion enthält nicht mehr die mit Skalierungsschwankungen behaftete Proportionalitätskonstante K und ist eindeutig mit der Sagnacphase verknüpft. Der genaue Verlauf läßt sich in Abhängigkeit vom benutzten Modulationsgrad theoretisch berechnen und zur (z. B. mikroprozessorgesteuerten) Signalauswertung benutzen. Insbesondere läßt sich bei dieser Art der Auswertung der von der Theorie geforderte optimale Modulationshub anwenden.

## Patentansprüche

1. Verfahren zur Signalauswertung bei einem den Sagnac-Effekt ausnutzenden faseroptischen Rotationssensor, bei dem zwei gegenläufig in einem aus mehreren Windungen einer Lichtleitfaser gebildeten Umlaufpfad umlaufende Lichtwellen überlagert werden und in dem ein Phasenmodulator das umlaufende Licht moduliert und mittels einer Auswerteinheit aus dem vom Rotationssensor gebildeten Signal mit dem Modulationshub $\psi_m$ ein von der Rotationsgeschwindigkeit abhängiges Ausgangssignal gebildet wird, wobei eine im Ausgangssignal der Auswerteeinheit enthaltene Proportionalitätskonstante K kompensiert wird, dadurch gekennzeichnet, daß durch Bildung der Differenz des Maximal- und des Minimalwerts des Detektorsignals $i_D$ in einer Meßeinrichtung (12) eine die Proportionalitätskonstante K enthaltende Größe bestimmt und anschließend zur Kompensation benutzt wird.

2. Verfahren nach Anspruch 1, dadurch gekennzeichnet, daß der Modulationshub $\psi_m \geq \pi/2$ ist, wobei durch die Differenzbildung die Proportionalitätskonstante K direkt ermittelt wird.

3. Verfahren nach Anspruch 2, dadurch gekennzeichnet, daß das Ausgangssignal durch die ermittelte Proportionalitätskonstante K dividiert wird.

4. Verfahren nach Anspruch 2, dadurch gekennzeichnet, daß die Proportionalitätskonstante K in einen Regelkreis zur Lichtleistungsstabilisierung rückgekoppelt wird.

5. Verfahren nach Anspruch 1, dadurch gekennzeichnet, daß der Modulationshub $\psi_m < \pi/2$ ist, daß durch die Differenzbildung die Proportionalitätskonstante K verknüpft mit einer Abhängigkeitsfunktion ermittelt wird, und daß das Ausgangssignal durch die ermittelte Proportionalitätskonstante K verknüpft mit einer Abhängigkeitsfunktion dividiert wird.

## Claims

1. Method of signal processing for a fibre-optical rotation sensor utilizing the Sagnac effect, in which two light waves circulating in opposite directions in a circulation path formed of several turns of an optical fibre are superimposed and in which a phase modulator modulates the circulating light and an output signal dependent on the rate of rotation is formed by means of a processing unit from the signal with the modulation deviation $\psi_m$ formed by the rotation sensor, compensation being made for a proportionality constant K contained in the output signal of the processing unit, characterised in that a value containing the proportionality constant K is determined by subtracting the minimum from the maximum value of the detector signal $i_D$ in a measuring instrument (12) and is subsequently used for the compensating.

2. Method according to Claim 1, characterised in that the modulation deviation $\psi_m$ is $\geq \pi/2$, the proportionality constant K being determined directly by the subtraction.

3. Method according to Claim 2, characterised in that the output signal is divided by the determined proportionality constant K.

4. Method according to Claim 2, characterised in that the proportionality constant K is fed-back in a control loop for light power stabilization.

5. Method according to Claim 1, characterised in that the modulation deviation $\psi_m$ is $< \pi/2$, that the proportionality constant K linked with a dependence function is determined by the substraction, and that the output signal is divided by the determined proportionality constant K linked with a dependence function.

## Revendications

1. Procédé d'évaluation de signaux dans le cas d'un détecteur de rotation à fibre optique utilisant l'effet Sagnac où deux ondes lumineuses progressant dans une voie périphérique constituée par plusieurs spires d'une fibre conductrice de lumière sont combinées et où un modulateur de phase module la lumière tournante et, au moyen d'une unité d'évaluation, à partir du signal produit par le détecteur de rotation, et ayant l'amplitude de modulation $\psi_m$, un signal de sortie fonction de la vitesse de rotation est produit, auquel cas une constante de proportionnalité K contenue dans le signal de sortie de l'unité d'évaluation est compensée, caractérisé en ce que, par formation de la différence entre la valeur maximale et la valeur minimale du signal de détecteur $i_D$, une grandeur contenant la constante de proportionnalité K est déterminée dans un dispositif de mesure (12) et est ensuite utilisée pour une compensation.

2. Procédé selon la revendication 1, caractérisé en ce que l'amplitude de modulation $\psi_m$ est supérieure ou égale à $\pi/2$, la constante de proportionnalité K étant obtenue directement par la formation de différence.

3. Procédé selon la revendication 2, caractérisé en ce que le signal de sortie est divisé par la constante de proportionnalité K obtenue.

4. Procédé selon la revendication 2, caractérisé en ce que la constante de proportionnalité K est renvoyée dans un circuit de régulation servant à la stabilisation de puissance lumineuse.

5. Procédé selon la revendication 1, caractérisé en ce que l'amplitude de modulation $\psi_m$ est inférieure à $\pi/2$ et en ce que, par la formation de différence, la constante de proportionnalité K, combinée avec une fonction de dépendance, est obtenue et en ce que le signal de sortie est divisé par la constante de proportionnalité obtenue K, combinée avec une fonction de dépendance.

FIG.1

FIG.2